# FASCICULE DE BREVET EUROPEEN

(11) **EP 3 734 130 B1**
(45) Date de publication et mention de la délivrance du brevet: **14.12.2022**
(21) Numéro de dépôt: 20171694.1
(22) Date de dépôt: 28.04.2020
(51) Int. Cl.: F16L 21/00, F16L 21/03, F16L 21/06

(54) **DISPOSITIF DE SERRAGE COMPRENANT UN JOINT D'ETANCHEITE ET ENSEMBLE DE SERRAGE COMPRENANT UN TEL DISPOSITIF**
KLEMMVORRICHTUNG MIT EINER DICHTUNG SOWIE KLEMMANORDNUNG MIT EINER SOLCHEN KLEMMVORRICHTUNG
TIGHTENING DEVICE COMPRISING A SEALING GASKET AND ASSEMBLY COMPRISING SUCH A DEVICE

(30) Priorité: 03.05.2019 FR 1904668
(43) Date de publication de la demande: 04.11.2020
(73) Titulaire: Caillau, 92130 Issy-les-Moulineaux (FR)
(72) Inventeur: CLERC, Dylan, 41200 Romorantin-Lanthenay (FR); JACQUELIN, Arnaud, 41230 Mur-de-Sologne (FR)
(74) Mandataire: Cabinet Beau de Loménie

(56) Documents cités:
- US-A- 4 201 407
- US-A- 5 588 680
- US-A1- 2003 205 899
- US-A1- 2006 175 837

## Description

### Domaine Technique

Le présent exposé se rapporte à un dispositif de serrage comprenant un collier et un joint d'étanchéité, et à un ensemble de serrage comprenant un tel dispositif.

### Technique antérieure

On connait des joints d'étanchéité de forme annulaire, réalisés par un anneau fermé. Pour réaliser leur fonction d'étanchéité, ces joints d'étanchéité doivent être comprimés et doivent donc être formés dans des matériaux permettant une telle compression tout en présentant les qualités requises pour résister aux conditions de l'environnement dans lequel est placé le joint d'étanchéité, par exemple en termes de température, de pression, ou de variation de ces paramètres. De plus, généralement, pour de tels joints d'étanchéité fermés, la différence entre le diamètre du joint d'étanchéité à l'état libre et le diamètre du joint d'étanchéité à l'état serré, après compression, est en général faible. Ainsi, ces joints d'étanchéité de type fermé ne conviennent pas à certaines applications.

On connait par ailleurs, par exemple par les brevets EP 2 598 785 et EP 3 232 107, des dispositifs de serrage comprenant un collier qui présente une ceinture apte à être serrée par réduction de son diamètre et un joint d'étanchéité pré-monté dans le collier. Plus précisément, ce système comprend une rondelle qui comprend une partie annulaire fermée formant le joint d'étanchéité et des pattes reliant ce joint d'étanchéité au collier. Le joint d'étanchéité annulaire fermé est initialement maintenu à une distance significative de la périphérie interne du collier de manière à permettre l'engagement du tube externe entre le joint d'étanchéité et cette périphérie interne. Ensuite, le tube interne est lui-même engagé de manière à venir au contact du joint d'étanchéité. Ce dispositif est particulièrement adapté au serrage de deux tubes emmanchés ensemble et présentant des surfaces évasées en saillie radiale servant d'appui pour un collier de serrage qui comprend un renfoncement pouvant loger ces surfaces évasées en saillie radiale, le joint annulaire fermé ayant lui-même une forme tronconique adaptée à ces surfaces évasées.

On connait par ailleurs des joints d'étanchéité de type ouvert, en particulier du type réalisé par une bande enroulée sur elle-même et dont les extrémités coopèrent entre elles par un agencement d'étanchéité. Un tel joint d'étanchéité est par exemple divulgué par le document EP 1 181 477. Un joint d'étanchéité de ce type présente l'avantage d'être facile à fabriquer et de permettre notamment, sans changement très important de l'outil de fabrication, de fabriquer des joints d'étanchéité de diamètres différents, puisque le diamètre du joint d'étanchéité dépend de la longueur de la bande dans laquelle il est formé. Par ailleurs, un joint d'étanchéité de ce type peut être monté aisément autour ou à l'intérieur des objets dont il doit assurer une liaison étanche et peut être réalisé dans un matériau dont il n'est pas nécessairement requis qu'il se déforme notablement sous une compression radiale, ce qui permet de choisir des matériaux résistant à des contraintes environnementales exigeantes, par exemple en termes de température, de pression ou de gradient de ces paramètres. En particulier, un tel joint d'étanchéité peut être réalisé dans un métal de type acier inoxydable.

Le document US 2006/175837 divulgue un dispositif de serrage selon le préambule de la revendication 1.

### Exposé de l'invention

Pour certaines applications, il existe un besoin pour améliorer les joints d'étanchéité de type ouvert existants. En effet, l'ouverture du joint d'étanchéité, c'est-à-dire la jonction entre les extrémités de la bande dans laquelle il est formé, peut présenter une zone de faiblesse en matière d'étanchéité, malgré le fait que les extrémités en question coopèrent entre elles par un agencement d'étanchéité. De plus, selon le matériau dans lequel il est formé, le joint d'étanchéité peut présenter un effet ressort c'est-à-dire que la bande dans laquelle il est formé peut avoir tendance à se dérouler ce qui, dans certaines applications, peut compliquer la manutention, le stockage et le montage.

L'exposé vise à remédier au moins substantiellement aux inconvénients précités. Ainsi, l'exposé se rapporte à un dispositif de serrage selon la revendication 1.

Du fait du décalage angulaire des agencements d'étanchéité des deux manchons, l'agencement d'étanchéité de chaque manchon est "ponté" par l'autre manchon. Ainsi, l'agencement d'étanchéité de chaque manchon est recouvert radialement, soit du côté extérieur, soit du côté intérieur, par la bande dans laquelle est formé l'autre manchon. De plus, les manchons sont retenus l'un par rapport à l'autre, ce qui signifie qu'ils se maintiennent mutuellement. En d'autres termes, la présence de chaque manchon tend à s'opposer à ce que l'autre manchon n'ait tendance à se dérouler ou à ne pas conserver sa forme souhaitée.

Cependant, le joint d'étanchéité conserve l'avantage des joints d'étanchéité de type ouvert en ce qu'il est simple à fabriquer pour différents diamètres en ajustant la longueur des bandes dans laquelle sont formés les deux manchons et en ce qu'il réalise sa fonction d'étanchéité par une réduction de son diamètre faisant se rapprocher des extrémités respectives des deux manchons.

Ainsi, ce dispositif de serrage permet d'utiliser un joint d'étanchéité fonctionnant comme un joint d'étanchéité de type ouvert pré-monté dans un collier. Lorsque le joint d'étanchéité est en place dans le collier, l'espace annulaire permet l'insertion d'un objet annulaire tel que l'extrémité d'un tube entre la ceinture et le joint d'étanchéité. Ainsi, le dispositif de serrage est pré-monté sur cet objet annulaire, qui peut recevoir un autre objet annulaire, en particulier un tube intérieur qui sera emmanché dans cet ensemble, en particulier en étant emmanché dans le joint d'étanchéité de sorte que ce joint d'étanchéité se trouve entre les deux objets emmanchés l'un dans l'autre pour assurer leur liaison étanche une fois que le collier est serré autour de l'emmanchement ainsi réalisé.Optionnellement, les deux manchons sont formés dans des matériaux différents, la bande formant le premier manchon étant optionnellement formée dans un matériau à base de mica et la bande formant le deuxième manchon étant optionnellement métallique.

Optionnellement, la bande formant au moins l'un des premier et deuxième manchons a naturellement tendance à se dérouler et est maintenue enroulée par l'autre manchon.

Optionnellement, l'agencement d'étanchéité d'au moins l'un des premier et deuxième manchons comprend une conformation d'engagement mâle/femelle.

Optionnellement, au moins l'un des premier et deuxième manchons présente au moins une patte de coincement, sous laquelle un bord de l'autre manchon est coincé.

Optionnellement, l'entretoise comprend une patte d'entretoisement portée par le joint d'étanchéité, en saillie radiale vers l'extérieur.

Optionnellement, le dispositif comprend un détrompeur angulaire de joint d'étanchéité configuré pour déterminer une position angulaire du joint d'étanchéité par rapport au collier.

Optionnellement, l'un des éléments formés par la ceinture et le joint d'étanchéité présente un bord de calage et l'autre élément présente une saillie de calage apte à coopérer avec le bord de calage pour retenir le joint d'étanchéité vis-à-vis d'un déplacement par rapport au collier.

Optionnellement, le joint d'étanchéité présente un bord avant pourvu d'au moins une butée configurée pour coopérer avec le bord avant de la ceinture pour retenir le joint d'étanchéité vis-à-vis d'un déplacement dans au moins une direction par rapport à la ceinture, la butée comprenant optionnellement une patte redressée vers l'extérieur.

Optionnellement, la ceinture présente une fenêtre dont le bord forme un bord de calage, et le joint d'étanchéité présente une patte de retenue redressée dans cette fenêtre.

Optionnellement, le collier présente des pattes de serrage, relevées radialement par rapport à la ceinture et aptes à être déplacées l'une par rapport à l'autre pour serrer le collier.

Le présent exposé concerne encore un ensemble de serrage de tube, comprenant un dispositif de serrage selon le présent exposé et un tube dont l'extrémité est apte à être insérée entre le joint d'étanchéité et la ceinture.

Optionnellement, l'ensemble comprend un détrompeur de position de tube déterminant une position angulaire du tube par rapport au moins l'un des éléments comprenant le joint d'étanchéité et le collier.

Optionnellement, le joint d'étanchéité présente une patte détrompeur de position de tube qui fait radialement saillie vers l'extérieur du joint d'étanchéité et qui est configurée pour être engagée dans une fente formée à l'extrémité du tube.

Optionnellement, le joint d'étanchéité comprend une patte anti-extraction, configurée pour coopérer avec une fenêtre du tube pour s'opposer à l'extraction du joint d'étanchéité hors du tube.

L'exposé sera bien compris et son objet apparaitra mieux à la lecture de la description détaillée qui suit, d'un mode de réalisation et de ses variantes, représentés à titre d'exemples non limitatifs.

### Brève description des dessins

[Fig. 1] La figure 1 est une vue en perspective éclatée montrant un ensemble de serrage de tube comprenant un joint d'étanchéité selon le présent exposé et un dispositif de serrage selon le présent exposé.
[Fig. 2A] La figure 2A est une vue en perspective d'un dispositif de serrage selon le présent exposé, selon un premier angle de vue.
[Fig. 2B] La figure 2B est une vue en perspective du dispositif de serrage la figure 2A selon un autre angle de vue.
[Fig. 3] La figure 3 montre le dispositif de serrage en perspective, le joint d'étanchéité étant représenté séparé du collier.
[Fig. 4A] La figure 4A montre en perspective l'un des manchons du joint d'étanchéité du dispositif de serrage des figures précédentes.
[Fig. 4B-4D] Les figures 4B à 4D montrent en coupe axiale partielle une partie du joint d'étanchéité.
[Fig. 5] La figure 5 montre en perspective le dispositif de serrage selon le présent exposé monté à l'extrémité d'un tube externe, avant emmanchement d'un tube interne dans le tube externe.
[Fig. 6] La figure 6 est une vue analogue à la figure 1 pour une variante de réalisation.

### Description des modes de réalisation

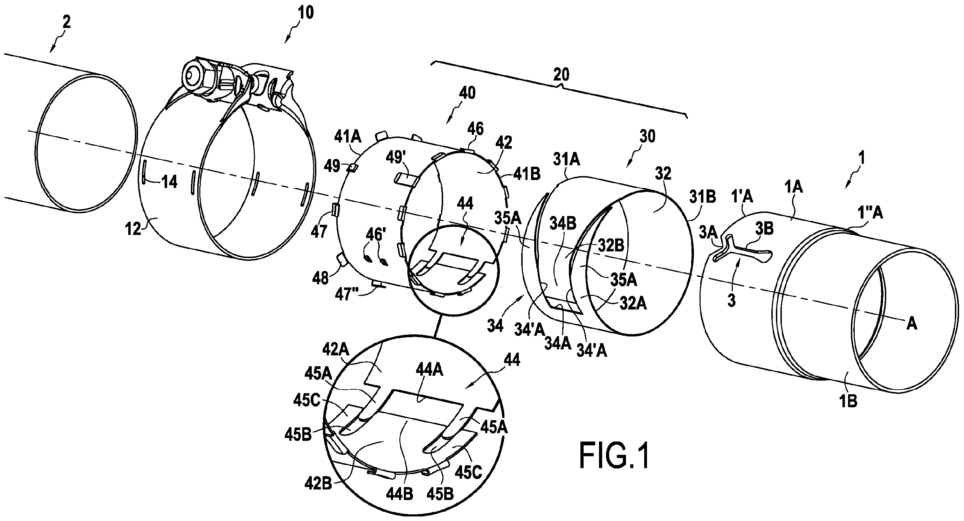

L'ensemble représenté sur la figure 1 comprend un dispositif de serrage qui comprend lui-même un collier 10 et un joint d'étanchéité 20, lequel comprend un premier manchon 30 et un deuxième manchon 40. Cet ensemble comprend également un tube externe 1 et un tube interne 2. Le tube interne 2 est configuré pour être emmanché dans le tube externe 1 pour raccorder les deux tubes. Plus précisément, le tube interne 2 vient s'emmancher dans l'extrémité 1A du tube externe 1 autour de laquelle vient se placer le collier de serrage pour serrer l'assemblage ainsi réalisé. Comme on le verra dans la suite, dans cette situation assemblée, le joint d'étanchéité 20 est lui-même disposé entre les tubes interne et externe. Pour l'emmanchement, le joint d'étanchéité 20 vient se placer dans l'extrémité 1A du tube 1 autour de laquelle est disposé le collier de serrage 10, et le tube interne 2 vient s'emmancher dans le joint d'étanchéité 20. En l'espèce, les parties des deux tubes 1 et 2 emmanchés l'un dans l'autre forment des surfaces cylindriques sans renflement. L'extrémité 1A du tube externe 1 est toutefois délimitée, du côté opposé à son extrémité libre 1'A, par un épaulement 1"A. L'extrémité 1A est ainsi élargie, et la partie restante 1B du tube 1 présente un diamètre analogue à celui du tube 2.

S'agissant du joint d'étanchéité 20, chacun des premier et deuxième manchons 30 et 40 est formé par une bande, respectivement 32 et 42, qui est enroulée sur elle-même et dont les extrémités sont configurées pour coopérer entre elles via un agencement d'étanchéité.

Ainsi, les extrémités 32A et 32B de la bande 32 coopèrent entre elles via un agencement d'étanchéité 34 qui comprend en l'espèce un engagement mâle/femelle. Dans l'exemple, cet agencement d'étanchéité comprend une encoche 34A formée à l'extrémité 32A et délimitée entre des bords de contact 34'A formés en l'espèce par des bords internes de pattes 35A subsistant de part et d'autre de l'encoche 34A.

L'agencement d'étanchéité 34 comprend également une languette 34B formée à l'extrémité 32B. On voit que, sur une partie de la longueur de l'encoche, cette longueur étant mesurée circonférentiellement, la largeur de cette encoche (mesurée parallèlement à l'axe A) varie. Plus précisément, dans la partie de l'encoche proche des extrémités libres des pattes 35A, la largeur de l'encoche augmente à mesure que l'on se rapproche de ces extrémités libres, c'est-à-dire à mesure que l'on s'éloigne du fond de l'encoche. De même, dans une partie de la longueur de la languette 34B, la largeur de cette languette augmente à mesure que l'on s'éloigne de son extrémité libre. Ainsi, lorsque la languette pénètre plus profondément dans l'encoche à mesure que le diamètre du manchon 30 diminue lors du serrage du collier, la pression de contact entre les bords de la languette et les bords de contact 34'A augmente de manière à réaliser un contact étanche. En l'espèce, la partie terminale de la languette et la partie de fond de l'encoche ont en revanche une largeur constante et égale, ce qui facilite l'avancée de la languette dans l'encoche.

Le deuxième manchon 40 est formé à partir d'une bande 42 enroulée sur elle-même et dont les extrémités, respectivement 42A et 42B coopèrent entre elles par un agencement d'étanchéité 44. En l'espèce, cet agencement d'étanchéité 44 comprend une conformation d'engagement mâle/femelle. Plus précisément, l'extrémité 42A comprend une encoche 44A délimitée entre deux pattes 45A, et l'extrémité 42B comprend une languette 44B qui, lorsque le diamètre du manchon 40 diminue, pénètre dans l'encoche 44A. En l'espèce, cette languette est délimitée latéralement par deux fentes 45B dans lesquelles pénètrent les pattes 45A à mesure que la languette 44B pénètre dans l'encoche 44A. Ces fentes 45B sont elles-mêmes bordées latéralement par des pattes 45C. Dans ce cas, l'agencement d'étanchéité forme en quelque sorte une chicane considérée axialement, la zone de contact entre les extrémités 42A et 42B s'effectuant entre les pattes 45C et 45A et la languette 44B.

Bien entendu, d'autres conformations d'agencement mâle/femelle seraient possibles. Ainsi, l'agencement d'étanchéité 44 du manchon 40 pourrait avoir la géométrie décrite ci-dessus pour l'agencement d'étanchéité 34 du manchon 30 et réciproquement. D'autres agencements d'étanchéité peuvent être prévus, qu'ils soient comme en l'espèce prévus directement sur la bande 32 ou 42, en une pièce avec elle, ou bien rapportés, par exemple en un matériau davantage déformable. L'étanchéité peut également être obtenue par un effet de chicane sans nécessairement mettre en œuvre les contraintes de contact évoquées plus haut. A l'inverse, pour au moins l'un des manchons, l'étanchéité peut être liée aux contraintes de contacts évoquées plus haut, en particulier au sein d'un engagement mâle/femelle, ces contraintes pouvant aller jusqu'à provoquer des déformations, plastiques ou élastiques.

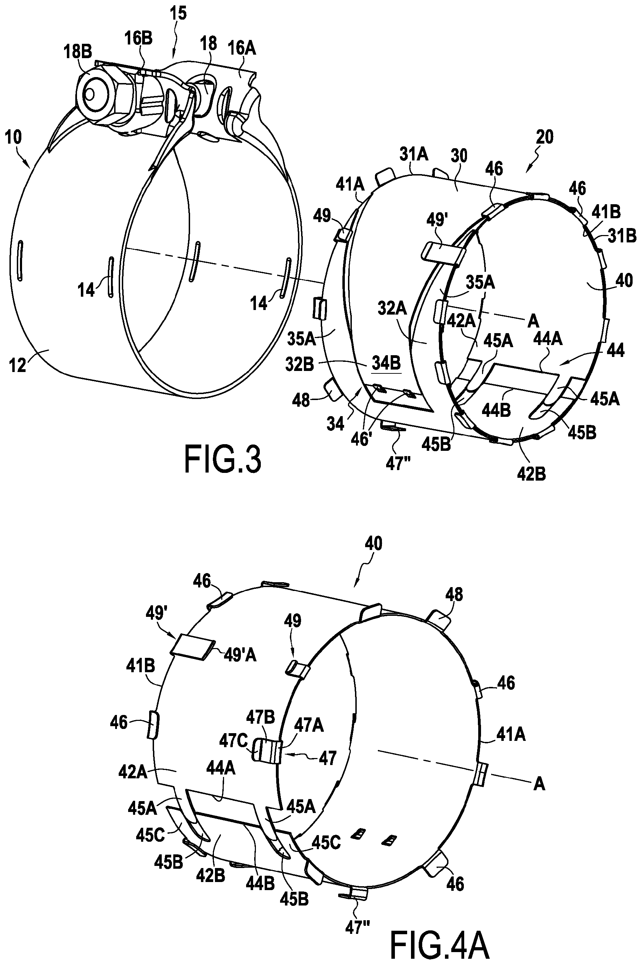

En se référant également à la figure 3, on comprend que, lorsque les manchons 30 et 40 sont assemblés l'un autour de l'autre pour former le joint d'étanchéité 20, leurs agencements d'étanchéité respectifs 34 et 44 sont décalés angulairement. Ainsi comme on le voit sur la figure 3, les zones de jonction entre les extrémités 32A et 32B de la bande dans laquelle est formé le manchon 30 sont couvertes radialement par une portion pleine de la bande 42 dans laquelle est formé le manchon 40. De même, la jonction des extrémités 42A et 42B de la bande 42 dans laquelle est formé le manchon 40 est couverte radialement par une partie pleine de la bande 32 dans laquelle est formé le manchon 30. En espèce, le manchon 30 est disposé autour du manchon 40, de sorte que l'agencement d'étanchéité 34 est couvert radialement du côté interne et que l'agencement d'étanchéité 44 est couvert radialement du côté externe.

Au sens du présent exposé, on qualifiera de "interne" les éléments tournés vers l'axe A du joint d'étanchéité (qui correspond à l'axe A de la ceinture du collier et des tubes lorsque ces éléments sont assemblés), tandis que les éléments externes sont ceux qui sont opposés à cet axe.

Par ailleurs, les qualificatifs « avant » et « arrière » sont entendus par rapport au sens d'emmanchement des tubes. Ainsi, l'extrémité 1'A du tube 1 est son extrémité avant à partir de laquelle il est emmanché sur le tube 2. Les bords avant 31A et 41A des manchons 30 et 40 sont ceux qui, lorsque le joint d'étanchéité est disposé autour de l'extrémité 1A du tube 1, sont les plus proches de l'extrémité libre 1'A de ce tube, par opposition aux bords arrière 31B et 41B de ces manchons.

Qu'il soit interne ou externe, l'un des manchons peut avoir naturellement tendance à se dérouler pour procurer un effet élastique. Ceci peut être le cas lorsque le manchon en question est réalisé en métal, comme c'est par exemple le cas du deuxième manchon 40, et peut également être le cas d'un manchon réalisé dans un matériau à base de mica, comme c'est par exemple le cas du manchon 30. Cependant, le fait que les deux manchons soient retenus l'un par rapport à l'autre limite cette tendance. En effet, le premier manchon 30, notamment en raison du pontage qu'il opère dans la région de la jonction entre les extrémités 42A et 42B du deuxième manchon 40, tend à s'opposer à l'éloignement de ces extrémités 42A et 42B et donc au déroulement de la bande 42 dans laquelle est formé ce deuxième manchon 40. Réciproquement, le deuxième manchon 40, notamment en raison du pontage qu'il opère dans la région de la jonction entre les extrémités 32A et 32B du premier manchon 30, tend à s'opposer à l'éloignement de ces extrémités 32A et 32B et donc au déroulement de la bande 32 dans laquelle est formé ce premier manchon 30.

En l'espèce, comme on le verra dans la suite, les deux manchons peuvent être retenus l'un par rapport à l'autre par coincement. Même si les deux manchons présentent chacun une certaine élasticité leur conférant une tendance à se dérouler, les contraintes de coincement (ou, généralement, les contraintes dues au fait qu'ils sont retenus l'un par rapport à l'autre) peuvent être suffisantes pour, en pontant la jonction des extrémités de chaque manchon par l'autre manchon, s'opposer à ce déroulement. Le coincement, qui peut être réalisé sous la forme d'un pincement, présente l'avantage de réaliser la retenue souhaitée tout en permettant de légers déplacements des deux manchons l'un par rapport à l'autre, selon leurs directions circonférentielles, afin de permettre les rapprochements des extrémités des bandes 32 et 42 permettant la réduction du diamètre du joint d'étanchéité sous l'effet du serrage du collier.

En l'espèce, comme indiqué plus haut, les deux manchons sont retenus l'un par rapport à l'autre par coincement. Ainsi, au moins l'un des premier et deuxième manchons 30 et 40 présente au moins une patte de coincement 46, sous laquelle un bord de l'autre manchon, en particulier un bord perpendiculaire à l'axe A du manchon, est coincé. En l'espèce le deuxième manchon 40, présente des pattes de coincement 46 sous lesquelles les bords du premier manchon 30 sont coincés. En l'espèce, les pattes de coincement 46 sont prévues sur les bords avant 41A et arrière 41B du manchon 40, de manière à pouvoir coincer les bords avant et arrière 31A et 31B du manchon 30. En l'espèce, dans la mesure où le manchon 40 est disposé à l'intérieur du manchon 30, les pattes de coincement sont formées par des extensions repliées du côté de la face externe du manchon 40. Pour l'assemblage des deux manchons, ces pattes de coincement peuvent initialement être redressées radialement, puis, une fois que le manchon 30 est disposé autour du manchon 40, être repliées contre la face externe de ce manchon pour venir pincer les bords du manchon 30.

Sur les figures 1 et 3, on remarque qu'une patte 49' est plus longue que les pattes de coincement 46 qui viennent d'être décrites. Cette patte 49', en plus d'une fonction anti-extraction et détrompeur de tube qui sera décrite plus loin, réalise une fonction de coincement. Du fait de sa longueur, elle coince non seulement le bord du manchon 30, mais également une patte 35A (celle qui est proche du bord arrière du manchon 30) et le bord adjacent de la languette 34B de ce manchon. Une patte 49 qui, comme on le verra dans la suite, réalise à la fois une fonction de coincement et une fonction de détrompeur de tube, coince l'autre patte 35A et le bord de la languette 34B qui est adjacent à cette autre patte.

Par ailleurs, l'extrémité libre de la languette 34B est elle-même coincée sous des pattes 46' découpées dans la bande 42 et légèrement redressées.

En l'espèce, les pattes de coincement 46, 49 et 49' sont réparties sur chacun des bords avant et arrière du manchon 40. On peut par exemple prévoir entre trois et quinze pattes de coincement, par exemple entre quatre et dix pattes de coincement sur l'un et/ou l'autre des bords avant et arrière. Bien entendu, le nombre de pattes de coincement pourra dépendre du diamètre du manchon.

On peut également prévoir qu'il y ait davantage de pattes de coincement sur l'un des bords du manchon, par exemple le bord arrière, par exemple parce que l'autre bord comporterait d'autres pattes ou conformations réalisant d'autres fonctions, ainsi qu'il sera exposé dans la suite à titre d'exemple.

En l'espèce, les pattes de coincement sont réalisées dans le manchon interne et repliées vers l'extérieur, de sorte que la périphérie interne du joint d'étanchéité est lisse.

Le dispositif de serrage selon le présent exposé comprend un collier de serrage 10 et le joint d'étanchéité qui vient d'être décrit. Comme on le voit sur les figures 1, 2A, 2B et 3, le collier 10 comprend une ceinture 12 qui est apte à être serrée par réduction de son diamètre. Cette ceinture 12 définit une forme cylindrique coaxiale avec les manchons 30 et 40 du joint d'étanchéité 20, lorsque le joint d'étanchéité est agencé dans le collier et serré autour des tubes.

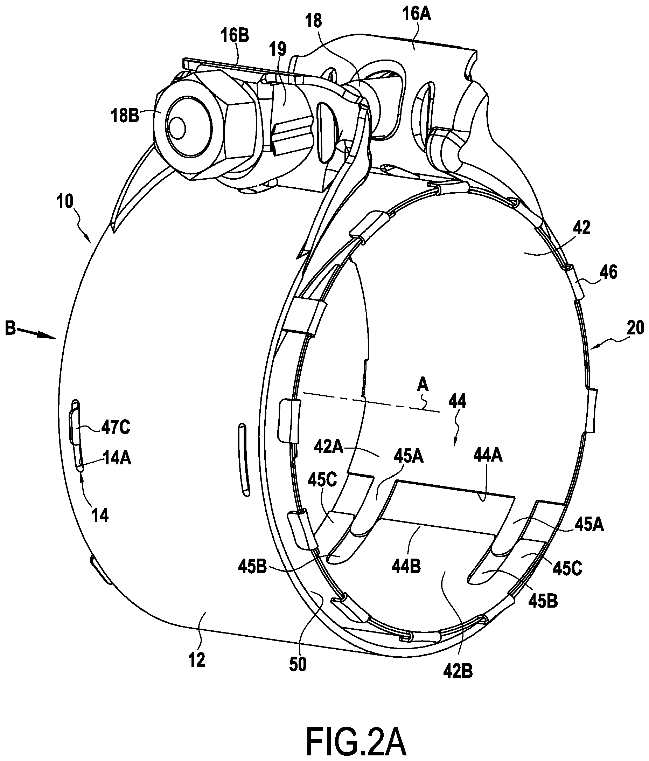

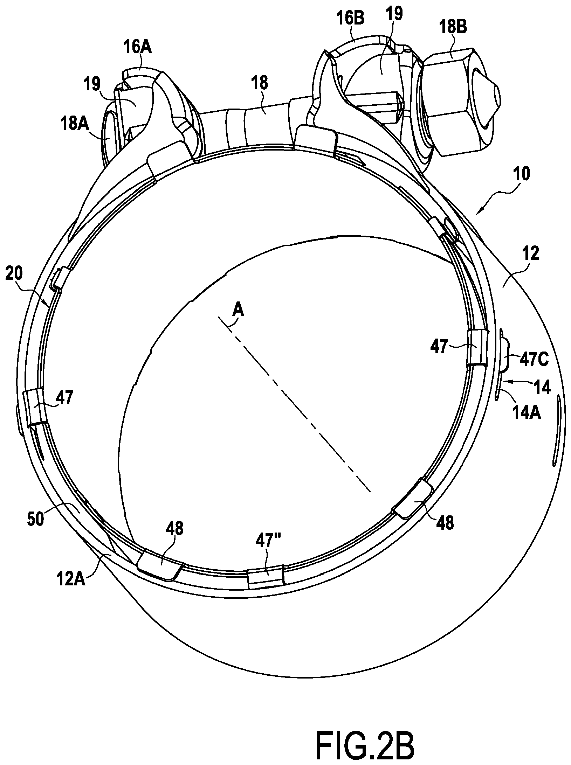

Comme on le voit mieux sur les figures 2A et 2B, lorsque le joint d'étanchéité 20 est disposé dans la ceinture 12 du collier 10, un espace annulaire 50 est dégagé entre la périphérie externe du joint d'étanchéité 20 (en l'espèce la périphérie externe du manchon 30) et la périphérie interne de la ceinture 12. Comme on le comprend sur la figure 1, ceci permet d'insérer l'extrémité 1A du tube 1 dans cet espace annulaire.

L'espace annulaire 50 peut être ménagé grâce à une entretoise qui s'étend entre le joint d'étanchéité et la ceinture. En l'espèce, cette entretoise comprend au moins une patte d'entretoisement 47 qui est portée par le joint d'étanchéité 20 et qui est en saillie radiale vers l'extérieur. Plus précisément, en l'espèce, la patte d'entretoisement 47 est portée par le manchon 40 et, comme les pattes de coincement 46, 49 et 49', elle est réalisée par une extension de ce manchon repliée vers l'extérieur.

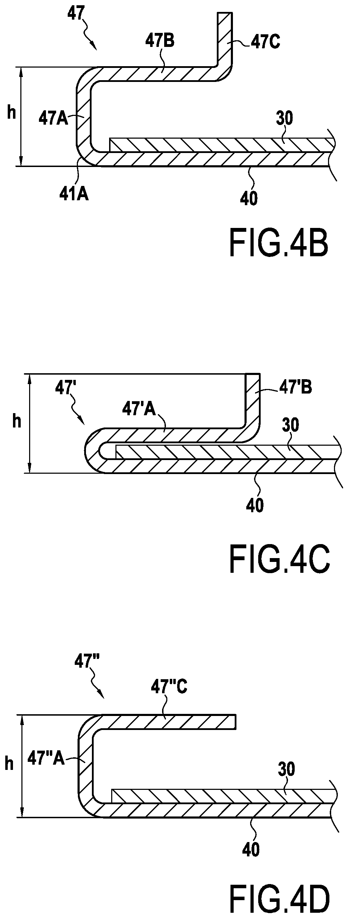

Comme on le voit sur les figures 4A à 4D, la patte d'entretoisement peut avoir plusieurs conformations. Sur les figures 4A et 4B est représentée une patte d'entretoisement 47 qui, à partir du bord avant 41A du manchon 40, est redressée radialement sur une hauteur h selon un tronçon 47A, puis repliée vers l'arrière parallèlement au manchon selon un tronçon 47B, puis à nouveau redressée radialement selon un tronçon terminal 47C. Considérés ensemble, la partie du manchon 40 proche de son bord 41A, le tronçon 47A et le tronçon 47B présentent une section axiale en U. Le tronçon 47B coopère avec la périphérie interne de la ceinture 12 pour maintenir l'espace annulaire 50 précité dont la hauteur radiale correspond à la hauteur h. Cependant, la ceinture 12 du collier présente une fenêtre 14 à travers laquelle dépasse le tronçon terminal 47C. Ainsi, le tronçon terminal 47C de la patte d'entretoisement 47 redressé dans la fenêtre 14 forme un moyen de calage du joint d'étanchéité 20 par rapport au collier, ainsi qu'il sera précisé dans la suite.

Sur la figure 4C, la patte d'entretoisement 47' est repliée à l'extérieur du manchon 40 pour former une patte de coincement du manchon 30. Ainsi, elle présente un tronçon replié 47'A qui' forme une patte de coincement plaquée sur la périphérie externe du manchon 30. Cependant, l'extrémité libre 47'B de cette patte 47' est redressée radialement de manière à délimiter, par rapport à la périphérie interne du manchon 40, une hauteur radiale h. Ainsi, par son extrémité terminale 47'B relevée, la patte 47' coopère avec une partie pleine de la ceinture 12 et peut former une entretoise. Cette patte 47' peut remplacer la patte 49 et réaliser à la fois la fonction de pincement déjà évoquée pour la patte 49, la fonction d'entretoisement, et une fonction de détrompeur de tube, qui sera décrite dans la suite.

Sur la figure 4D, la patte 47" est d'abord relevée radialement puis rabattue vers l'arrière, et présente donc un premier tronçon 47"A et un deuxième tronçon 47"C analogues aux premier et deuxième tronçons 47A et 47B de la patte 47 de la figure 4B. Ainsi, le tronçon 47"C peut coopérer avec la périphérie interne de la ceinture pour ménager l'espace annulaire 50 précité. Dans ce cas, la patte 47" ne contribue pas au coincement ou au pincement du manchon 30, mais elle peut contribuer à le caler axialement en alignant son bord avant 31A sur le bord avant 41A du manchon 40.

Optionnellement, le dispositif comprend un détrompeur angulaire de joint d'étanchéité configuré pour déterminer une position angulaire du joint d'étanchéité par rapport au collier. En l'espèce, ce détrompeur angulaire de joint d'étanchéité met à contribution la patte 47 représentée sur les figures 4A et 4B. En effet, comme indiqué précédemment, l'extrémité libre redressée 47C de cette patte 47 pénètre dans une fenêtre 14 de la ceinture, ce qui cale angulairement le joint d'étanchéité par rapport au collier. Ainsi, on peut prévoir que le joint d'étanchéité 20 soit orienté angulairement par rapport au collier de telle sorte que les agencements d'étanchéité des extrémités des deux manchons 30 et 40 soient dans une position particulière. S'agissant comme en l'espèce d'un collier de type ouvert, ceci permet d'éviter que ces agencements ne se trouvent au droit de la fente 15 existant entre les extrémités du collier.

En l'espèce, ce détrompeur angulaire est formé par l'extrémité de la patte d'entretoisement 47. De la même manière, on pourrait prévoir qu'un tel détrompeur angulaire soit formé par l'extrémité d'une patte ayant une autre fonction, en particulier une patte de coincement disposée et étendue en conséquence, coopérant éventuellement avec une encoche du bord avant du tube 1 pour réaliser en outre une fonction de détrompeur de position de tube qui sera décrite plus loin.

Par ailleurs, ce détrompeur angulaire s'oppose à un déplacement du joint d'étanchéité par rapport au collier non seulement, comme exposé, dans le sens circonférentiel mais également dans le sens axial, parallèle à l'axe A. Ainsi, le bord 14A de la fenêtre 14 forme un bord de calage coopérant avec la saillie de calage réalisée par la portion de patte terminale 47C pour retenir le joint d'étanchéité 20 vis-à-vis d'un déplacement axial par rapport au collier 10.

Cependant, dans l'exemple représenté, le bord avant du joint d'étanchéité présente également d'autres saillies de calage. En l'espèce, comme on le voit notamment sur la figure 4A, le bord avant 41A du manchon 40 présente des pattes 48 redressées radialement et délimitant ensemble des dimensions diamétrales supérieures aux dimensions diamétrales internes de la ceinture 12. Ceci est mieux visible sur la figure 2B, où l'on voit que le manchon 40 présente plusieurs pattes redressées radialement 48 qui retiennent le joint d'étanchéité 20 en coopérant avec le bord avant 12A de la ceinture. Dans ce cas, c'est donc le bord avant 12A de la ceinture qui sert de bord de calage.

Dans l'exemple représenté, le joint d'étanchéité 20 comprend trois pattes d'entretoisement régulièrement réparties, à savoir deux pattes 47 du type représenté sur la figure 4B et une patte 47" du type représenté sur la figure 4D, ainsi que quatre pattes de calage 48. Bien entendu, on pourra prévoir des nombres de pattes différents. Les pattes 48 servent de butée s'opposant au déplacement du joint d'étanchéité vers l'arrière par rapport à la ceinture. Les saillies de calage 47C formées par les portions terminales des pattes 47 s'opposent quant à elles à un déplacement axial dans les deux sens.

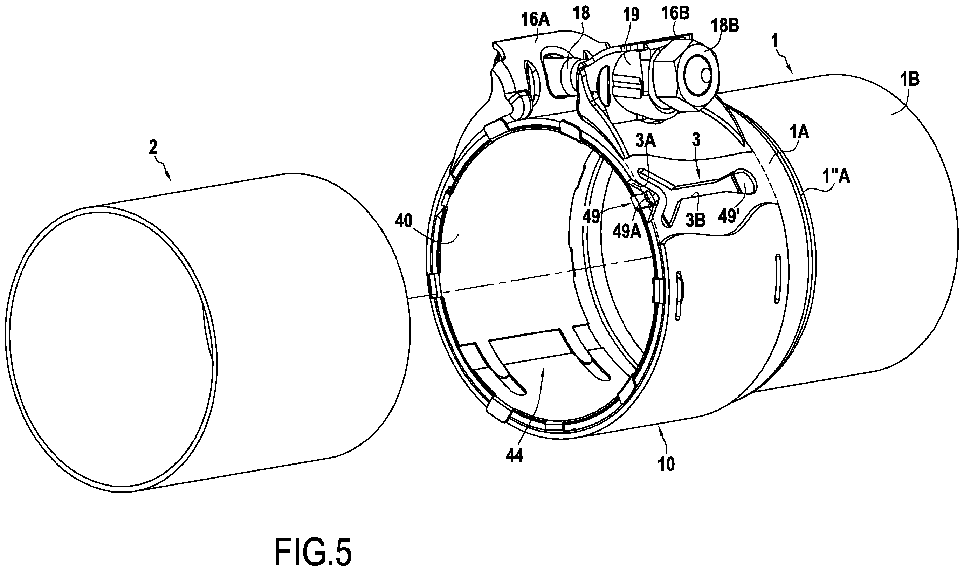

Le joint d'étanchéité 20 comprend en l'espèce en outre un détrompeur de position de tube qui, lorsque le dispositif de serrage est disposé à l'extrémité 1A du tube 1, détermine la position angulaire du dispositif de serrage par rapport au tube. En l'espèce, ce détrompeur de position de tube comprend une patte de détrompeur de position de tube 49 qui fait radialement saillie vers l'extérieur du joint d'étanchéité et qui est configurée pour s'engager dans une fente formée à l'extrémité du tube. En se reportant à la figure 1, on voit en effet que l'extrémité 1A du tube présente une fente 3 qui, en l'espèce, comprend une première partie de fente 3A formant une encoche sur le bord 1'A du tube et une deuxième partie 3B formant une fenêtre conformée sensiblement en Y, cette fenêtre ayant en l'espèce un contour fermé. Comme on le voit sur la figure 5 (sur laquelle une partie de la ceinture 12 recouvrant la fente 3 est arrachée pour faciliter la compréhension), lorsque le collier portant le joint d'étanchéité 20 est emmanché sur l'extrémité 1A du tube 1, la patte détrompeur de position de tube 49 s'engage dans l'encoche 3A et permet donc de caler angulairement le collier par rapport au tube. En l'espèce, cette patte détrompeur de position de tube 49 est repliée vers l'arrière à partir du bord avant du manchon 40. Son extrémité libre 49A est elle-même repliée vers l'avant en étant pincée sur elle-même. Comme évoqué, la patte détrompeur de position de tube 49 peut également, par sa partie repliée contre le manchon 30, contribuer au coincement du bord avant du manchon 30 par rapport au manchon 40. Elle peut encore, lorsque son extrémité libre 49A est redressée radialement, contribuer à l'entretoisement pour maintenir le joint d'étanchéité à distance de la ceinture 12 du collier.

Optionnellement, le joint d'étanchéité 20 comprend également une patte anti-extraction 49'. En l'espèce, cette patte 49' est formée par un prolongement du bord arrière 41B du manchon 40 replié vers l'avant à l'extérieur vers l'avant et dont l'extrémité libre 49'A est légèrement redressée. On voit sur la figure 1 que, lorsque le dispositif de serrage est disposé à l'extrémité 1A du tube 1, cette patte 49' fait saillie dans une partie de la fente 3B du tube 3. Les géométries de cette partie de fente et de la patte 49' sont telles que la patte coopère avec la fente pour s'opposer à une extraction vers l'avant du joint d'étanchéité par rapport au tube. Cette patte 49' réalise également une fonction détrompeur de position de tube, en calant angulairement le joint d'étanchéité par rapport au tube 1.

En l'espèce, l'extrémité 1A du tube 1 est pourvue de la fente 3, de sorte que, lors du serrage du collier, le diamètre de l'extrémité 1A peut être réduit par réduction de la largeur de la fente.

Cependant, cette fente est pontée du côté intérieur par une partie pleine du joint d'étanchéité 20. La partie 3B de la fente 3 forme une fenêtre avec laquelle coopère la patte anti-extraction 49'.

La patte d'entretoisement qui a été décrite (pattes 47, 47' et 47", voire 49) est située sur le bord avant du joint d'étanchéité, pour ne pas faire obstacle à l'engagement de l'extrémité 1A du tube 1 entre la ceinture 12 et le joint 20. Cependant, la patte 49' peut également réaliser une fonction d'entretoisement maintenant le joint d'étanchéité à distance de la ceinture, à condition de pouvoir s'effacer lors de l'emmanchement de l'extrémité 1A du tube 1 dans le dispositif de serrage.

Par exemple, la bande formant le premier manchon 30 est formée dans un matériau à base de mica. Il s'agit par exemple d'un matériau comprenant du mica et un liant de type silicone. Par exemple, il peut s'agir d'un matériau de type connu sous la marque Cogemica Hi-temp^{®} résistant à des températures élevées et comprenant, en masse, 90% de mica ou davantage et 10% de liant ou moins. Par exemple, la bande formant le deuxième manchon 40 peut être réalisée en métal, en particulier un acier inoxydable. On a choisi ici de placer le manchon métallique à l'intérieur de l'autre manchon, car c'est le manchon métallique qui porte, en une seule pièce avec lui, les pattes de coincement de l'autre manchon, ces pattes étant repliées vers l'extérieur. On pourrait inverser la disposition, en plaçant le manchon métallique à l'extérieur, tout en réalisant une retenue adaptée des deux manchons l'un par rapport à l'autre. Dans ce cas, le manchon extérieur peut bien entendu porter les pattes d'entretoisement et de détrompeur de joint et/ou de tube.

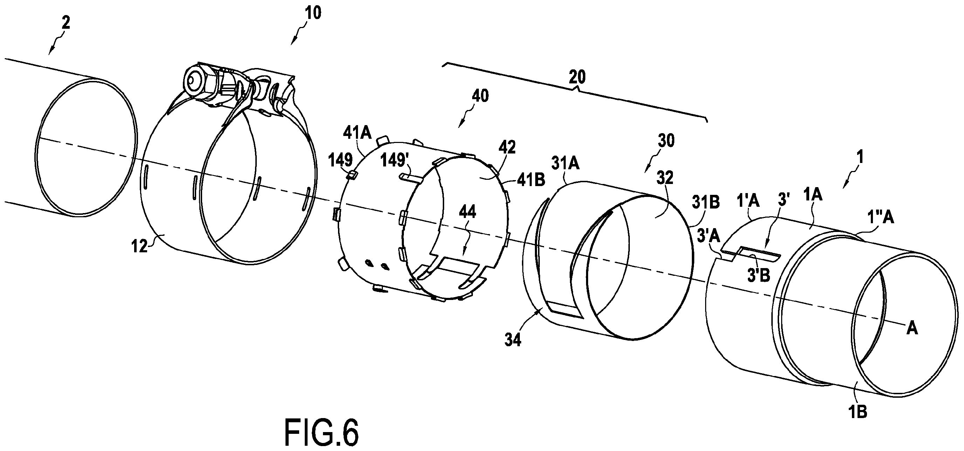

La figure 6 montre une variante de réalisation qui se distingue seulement de celle qui vient d'être décrite par la conformation de la fente formée à l'extrémité 1A du tube 1 et, en conséquence, par la conformation des pattes détrompeur de position de tube et anti-extraction portées par le joint d'étanchéité 20 et, plus précisément, par le manchon 40. Ainsi, seuls ces éléments sont décrits en référence à la figure 6. On voit en l'espèce que la fente 3' formée à l'extrémité du tube 1A comporte deux tronçons de fente axiale élémentaire, en particulier un tronçon de fente élémentaire avant 3'A ouvert sur le bord avant 1'A du tube, et un tronçon de fente élémentaire fermé 3'B, qui forme une fenêtre 3'B et qui est situé à l'arrière de cette fente 3'A et légèrement décalé angulairement par rapport à elle. Le manchon 40 présente quant à lui une patte détrompeur de position de tube 149 qui est repliée vers l'arrière à l'extérieur de ce manchon 40 et est dimensionnée pour pouvoir s'engager dans la portion de fente ouverte 3'A du tube. Ce manchon 40 présente également une patte anti-extraction 149' repliée vers l'avant à partir du bord arrière de ce manchon et légèrement décalée angulairement par rapport à la patte 149, et dont la conformation lui permet de s'engager dans la portion de fente fermée 3'B pour s'opposer à une extraction vers l'avant du joint d'étanchéité par rapport au tube 1.

Dans l'exemple représenté, le collier 10 est de type ouvert, ce qui signifie que les extrémités de la ceinture 12 sont repliées radialement pour former des pattes de serrage 16A et 16B qui sont aptes à être déplacées l'une par rapport à l'autre pour serrer le collier. En l'espèce, ces pattes de serrage coopèrent avec une tige de serrage 18 formée en l'espèce par le fût d'une vis comprenant une tête 18A qui est retenue en arrière des pattes de serrage et un écrou 18B retenu en arrière de l'autre patte de serrage, éventuellement via des entretoises 19. Dans le cas précis des pattes de serrage 16A et 16B, l'arrière d'une patte de serrage est le côté de cette patte qui est opposé à l'autre patte de serrage. Une fente 15 du collier est ainsi ménagée entre les pattes de serrage 16A et 16B. Le positionnement angulaire du joint d'étanchéité 20 par rapport au collier permet d'éviter que les extrémités des bandes dans lesquelles sont formés les manchons ne soient situées au droit de cette fente.

On remarque enfin que le collier présente plusieurs séries de fenêtres 14 disposées symétriquement par rapport à un plan radial médian du collier perpendiculaire à son axe A. Ceci permet de faire en sorte que le collier puisse être indifféremment disposé dans l'un ou l'autre sens par rapport à ce plan radial médian (c'est-à-dire que son bord arrière prend la place de son bord avant et réciproquement) tout en permettant un positionnement correct du joint d'étanchéité dans le collier.

## Revendications

1. Dispositif de serrage comprenant un collier (10) qui présente une ceinture (12) apte à être serrée par réduction de son diamètre, et un joint d'étanchéité (20) disposé à l'intérieur de la ceinture en étant retenu axialement par rapport au collier et comprenant un premier et un deuxième manchon coaxiaux (30, 40) disposés l'un autour de l'autre en étant retenus l'un par rapport à l'autre, chaque manchon étant formé par une bande (32, 42) enroulée sur elle-même dont les extrémités (32A, 32B ; 42A, 42B) sont configurées pour coopérer entre elles via un agencement d'étanchéité (34, 44) en permettant une réduction du diamètre du manchon, les agencements d'étanchéité (34, 44) des deux manchons étant décalés angulairement, **caractérisé en ce que** l'un des éléments comprenant le collier (10) et le joint d'étanchéité (20) comprend au moins une entretoise (47, 47', 47") ménageant entre le joint d'étanchéité (20) et la ceinture (12) un espace annulaire (50) permettant l'insertion d'un objet annulaire (1A) entre le joint d'étanchéité et la ceinture.

2. Dispositif selon la revendication 1, dans lequel les deux manchons (30, 40) sont formés dans des matériaux différents, la bande formant le premier manchon (30) étant optionnellement formée dans un matériau à base de mica et la bande (42) formant le deuxième manchon (40) étant optionnellement métallique.

3. Dispositif selon la revendication 1 ou 2, dans lequel la bande (32, 42) formant au moins l'un des premier et deuxième manchons (30, 40) a naturellement tendance à se dérouler et est maintenue enroulée par l'autre manchon.

4. Dispositif selon l'une quelconque des revendications 1 à 3, dans lequel l'agencement d'étanchéité (34, 44) d'au moins l'un des premier et deuxième manchons comprend une conformation d'engagement mâle/femelle.

5. Dispositif selon l'une quelconque des revendications 1 à 4, dans lequel au moins l'un des premier et deuxième manchons (30, 40) présente au moins une patte de coincement (46), sous laquelle un bord de l'autre manchon est coincé.

6. Dispositif selon l'une quelconque des revendications 1 à 5, dans lequel, l'entretoise comprend une patte d'entretoisement (47B, 47'B, 47"C) portée par le joint d'étanchéité (20), en saillie radiale vers l'extérieur.

7. Dispositif selon l'une quelconque des revendications 1 à 6, comprenant un détrompeur angulaire de joint d'étanchéité (47C, 14) configuré pour déterminer une position angulaire du joint d'étanchéité (20) par rapport au collier (10).

8. Dispositif selon l'une quelconque des revendications 1 à 7, dans lequel l'un des éléments formés par la ceinture (12) et le joint d'étanchéité (20) présente un bord de calage (12A, 14A) et l'autre élément présente une saillie de calage (47C, 48) apte à coopérer avec le bord de calage (14A) pour retenir le joint d'étanchéité (20) vis-à-vis d'un déplacement par rapport au collier (10).

9. Dispositif selon l'une quelconque des revendications 1 à 8, dans lequel le joint d'étanchéité (20) présente un bord avant (41A) pourvu d'au moins une butée (48) configurée pour coopérer avec le bord avant (12A) de la ceinture (12) pour retenir le joint d'étanchéité vis-à-vis d'un déplacement dans au moins une direction par rapport à la ceinture, la butée comprenant optionnellement une patte (48) redressée vers l'extérieur.

10. Dispositif selon l'une quelconque des revendications 1 à 9, dans lequel la ceinture présente une fenêtre (14) dont le bord (14A) forme un bord de calage, et le joint d'étanchéité présente une patte de retenue (47C) redressée dans cette fenêtre (14).

11. Dispositif selon l'une quelconque des revendications 1 à 10, dans lequel le collier présente des pattes de serrage (16A, 16B), relevées radialement par rapport à la ceinture et aptes à être déplacées l'une par rapport à l'autre pour serrer le collier.

12. Ensemble de serrage de tube, comprenant un dispositif de serrage selon l'une quelconque des revendications 1 à 11 et un tube (1) dont l'extrémité (1A) est apte à être insérée entre le joint d'étanchéité (20) et la ceinture (12).

13. Ensemble selon la revendication 12, comprenant un détrompeur de position de tube (49, 3A ; 149, 3'A) déterminant une position angulaire du tube (1) par rapport au moins l'un des éléments comprenant le joint d'étanchéité (20) et le collier (10).

14. Ensemble selon la revendication 13, dans lequel le joint d'étanchéité présente une patte détrompeur de position de tube (49, 149) qui fait radialement saillie vers l'extérieur du joint d'étanchéité (20) et qui est configurée pour être engagée dans une fente (3A, 3'A) formée à l'extrémité du tube (1).

15. Ensemble selon l'une quelconque des revendications 12 à 14, dans lequel le joint d'étanchéité (20) comprend une patte anti-extraction (49', 149'), configurée pour coopérer avec une fenêtre (3B, 3'B) du tube (1) pour s'opposer à l'extraction du joint d'étanchéité hors du tube.

## Patentansprüche

1. Klemmvorrichtung, umfassend eine Schelle (10), die einen Ring (12) aufweist, welcher geeignet ist, durch Verringerung seines Durchmessers festgezogen zu werden, sowie eine Dichtung (20), die innerhalb des Rings angeordnet und dabei gegenüber der Schelle axial gehalten ist, und die eine erste und eine zweite koaxiale Manschette (30, 40) umfasst, die umeinander herum angeordnet und dabei relativ zueinander gehalten sind, wobei jede Manschette durch einen auf sich selbst gewickelten Streifen (32, 42) gebildet ist, dessen Enden (32A, 32B; 42A, 42B) dazu ausgebildet sind, unter Ermöglichen einer Verringerung des Durchmessers der Manschette über eine Dichtungsanordnung (34, 44) zusammenzuwirken, wobei die Dichtungsanordnungen (34, 44) der beiden Manschetten winkelmäßig versetzt sind, **dadurch gekennzeichnet, dass** eines der Elemente, umfassend die Schelle (10) und die Dichtung (20), wenigstens einen Abstandhalter (47, 47', 47") umfasst, der zwischen der Dichtung (20) und dem Ring (12) einen ringförmigen Raum (50) ausbildet, welcher das Einführen eines ringförmigen Gegenstands (1A) zwischen der Dichtung und dem Ring ermöglicht.

2. Vorrichtung nach Anspruch 1, bei der die beiden Manschetten (30, 40) aus unterschiedlichen Materialien gebildet sind, wobei der die erste Manschette (30) bildende Streifen optional aus einem auf Glimmer basierenden Material gebildet ist und der die zweite Manschette (40) bildende Streifen (42) optional metallisch ist.

3. Vorrichtung nach Anspruch 1 oder 2, bei der der Streifen (32, 42), der wenigstens eine der ersten und der zweiten Manschette (30, 40) bildet, auf natürliche Weise dazu neigt, sich abzuwickeln, und durch die andere Manschette aufgewickelt gehalten wird.

4. Vorrichtung nach einem der Ansprüche 1 bis 3, bei der die Dichtungsanordnung (34, 44) von wenigstens einer der ersten und zweiten Manschetten eine männliche/weibliche Eingriffsausbildung aufweist.

5. Vorrichtung nach einem der Ansprüche 1 bis 4, bei der wenigstens eine der ersten und zweiten Manschetten (30, 40) wenigstens eine Klemmlasche (46) aufweist, unter der ein Rand der anderen Manschette festgeklemmt ist.

6. Vorrichtung nach einem der Ansprüche 1 bis 5, bei der der Abstandhalter eine von der Dichtung (20) getragene und radial nach außen vorstehende Abstandslasche (47B, 47'B, 47"C) aufweist.

7. Vorrichtung nach einem der Ansprüche 1 bis 6, umfassend eine winkelige Dichtungs-Unverwechselbarkeitseinrichtung (47C, 14), die dazu ausgebildet ist, eine Winkelposition der Dichtung (20) relativ zu der Schelle (10) festzulegen.

8. Vorrichtung nach einem der Ansprüche 1 bis 7, bei der eines der durch den Ring (12) und die Dichtung (20) gebildeten Elemente einen Keilrand (12A, 14A) und das andere Element einen Keilvorsprung (47C, 48) aufweist, welcher geeignet ist, mit dem Keilrand (14A) zusammenzuwirken, um die Dichtung (20) gegenüber einer Bewegung relativ zu der Schelle (10) festzuhalten.

9. Vorrichtung nach einem der Ansprüche 1 bis 8, bei der die Dichtung (20) einen vorderen Rand (41A) aufweist, der mit wenigstens einem Anschlag (48) versehen ist, welcher dazu ausgebildet ist, mit dem vorderen Rand (12A) des Rings (12) zusammenzuwirken, um die Dichtung gegenüber einer Bewegung in wenigstens einer Richtung relativ zu dem Ring festzuhalten, wobei der Anschlag optional eine nach außen aufgerichtete Lasche (48) umfasst.

10. Vorrichtung nach einem der Ansprüche 1 bis 9, bei der der Ring ein Fenster (14) aufweist, dessen Rand (14A) einen Keilrand bildet, und die Dichtung eine in diesem Fenster (14) aufgerichtete Haltelasche (47C) aufweist.

11. Vorrichtung nach einem der Ansprüche 1 bis 10, bei der die Schelle Klemmlaschen (16A, 16B) aufweist, die gegenüber dem Ring radial aufgerichtet und geeignet sind, relativ zueinander bewegt zu werden, um die Schelle festzuziehen.

12. Anordnung zum Festklemmen eines Rohrs, umfassend eine Klemmvorrichtung nach einem der Ansprüche 1 bis 11 und ein Rohr (1), dessen Ende (1A) geeignet ist, zwischen die Dichtung (20) und den Ring (12) eingeführt zu werden.

13. Anordnung nach Anspruch 12, umfassend eine Unverwechselbarkeitseinrichtung für die Rohrposition (49, 3A ; 149, 3'A), die eine Winkelposition des Rohrs (1) in Bezug auf wenigstens eines der Elemente, umfassend die Dichtung (20) und die Schelle (10), festlegt.

14. Anordnung nach Anspruch 13, bei der die Dichtung eine Lasche als Unverwechselbarkeitseinrichtung für die Rohrposition (49, 149) aufweist, die von der Dichtung (20) radial nach außen vorsteht und die dazu ausgebildet ist, in einen Schlitz (3A, 3'A), welcher am Ende des Rohrs (1) gebildet ist, einzugreifen.

15. Anordnung nach einem der Ansprüche 12 bis 14, bei der die Dichtung (20) eine Herausziehsicherungslasche (49', 149') umfasst, die dazu ausgebildet ist, mit einem Fenster (3B, 3'B) des Rohrs (1) zusammenzuwirken, um dem Herausziehen der Dichtung aus dem Rohr entgegenzuwirken.

## Claims

1. A clamping device comprising a collar (10) which has a belt (12) able to be clamped by reduction of its diameter, and a seal (20), disposed inside the belt while being retained axially relative to the collar and comprising a first and a second coaxial sleeve (30, 40) disposed one around the other while being retained relative to each other, each sleeve being formed by a strip (32, 42) wound on itself whose ends (32A, 32B; 42A, 42B) are configured to cooperate together via a sealing arrangement (34, 44) allowing a reduction in the diameter of the sleeve, the sealing arrangements (34, 44) of the two sleeves being angularly offset, **characterized in that** one of the elements comprising the collar (10) and the seal (20) comprises at least one spacer (47, 47', 47") arranging an annular space(50) between the seal and the belt, the annular space allowing the insertion of an annular object (1A) between the seal (20) and the belt (12).

2. The device as claimed in claim 1, wherein the two sleeves (30, 40) are formed in different materials, the strip forming the first sleeve (30) being optionally formed in a mica-based material, and the strip (42) forming the second sleeve (40) being optionally metallic.

3. The device as claimed in claim 1 or 2, wherein the strip (32, 42) forming at least one of the first and second sleeves (30, 40) naturally tends to unwind and is maintained wound by the other sleeve.

4. The device as claimed in any one of claims 1 to 3, wherein the sealing arrangement (34, 44) of at least one of the first and second sleeves comprises a male/female engagement configuration.

5. The device as claimed in any one of claims 1 to 4, wherein at least one of the first and second sleeves (30, 40) has at least one squeezing lug (46), under which one edge on the other sleeve is squeezed.

6. The device as claimed in any one of claims 1 to 5, wherein the spacer comprises a spacer lug (47B, 47'B, 47"C) carried by the seal (20), protruding radially outwardly.

7. The device as claimed in any one of claims 1 to 6, comprising an angular seal key (47C, 14) configured to determine an angular position of the seal (20) relative to the collar (10).

8. The device as claimed in any one of claims 1 to 7, wherein one of the elements formed by the belt (12) and the seal (20) has a wedge edge (12A, 14A) and the other element has a wedge protrusion (47C, 48) able to cooperate with the wedge edge (14A) to retain the seal (20) with respect to a movement relative to the collar (10).

9. The device as claimed in any one of claims 1 to 8, wherein the seal (20) has a front edge (41A) provided with at least one abutment (48) configured to cooperate with the front edge (12A) of the belt (12) to retain the seal with respect to a movement in at least one direction relative to the belt, the abutment comprising optionally a lug (48) raised outwardly.

10. The device as claimed in any one of claims 1 to 9, wherein the belt has a window (14) whose edge (14A) forms a wedge edge, and the seal has a retaining lug (47C) projecting in this window (14).

11. The device as claimed in any one of claims 1 to 10, wherein the collar has clamping lugs (16A, 16B), raised radially relative to the belt and able to be moved relative to each other to clamp the collar.

12. A tube clamping assembly, comprising a clamping device as claimed in any one of claims 1 to 11 and a tube (1) whose end (1A) is able to be inserted between the seal (20) and the belt (12).

13. The tube clamping assembly as claimed in claim 12, comprising a tube position key (49, 3A; 149, 3'A) determining an angular position of the tube (1) relative to at least one of the elements comprising the seal (20) and the collar (10).

14. The tube clamping assembly as claimed in claim 13, wherein the seal has a tube position key lug (49, 149) which protrudes radially outwardly of the seal (20) and which is configured to be engaged in a slot (3A, 3'A) formed at the end of the tube (1).

15. The tube clamping assembly as claimed in any one of claims 12 to 14, wherein the seal (20) comprises an anti-extraction lug (49', 149'), configured to cooperate with a window (3B, 3'B) of the tube (1) to oppose the extraction of the seal from the tube.
